# EUROPEAN PATENT APPLICATION

(11) **EP 2 009 915 A1**
(43) Date of publication of application: **31.12.2008**
(21) Application number: 07715164.5
(22) Date of filing: 02.03.2007
(51) Int. Cl.: H04N 5/76, G11B 20/10, H04N 5/85, H04N 5/93, H04N 7/173

(54) **PLAYBACK APPARATUS AND PLAYBACK SYSTEM**

(30) Priority: 03.04.2006 JP 2006101406; 13.09.2006 JP 2006248395
(71) Applicant: D&M Holdings, Inc., Kanagawa 210-8569 (JP)
(72) Inventor: UEHARA, Masahiro, Shirakawa-shi, Fukushima 961-0838 (JP)
(74) Representative: Hackney, Nigel John
(86) International application number: PCT/JP2007/054070
(87) International publication number: WO 2007/122872

(57) **Abstract**

Provided are a playback apparatus and a playback system capable of facilitating a setting suitable for an optimum audiovisual environment for reproducing an audio signal and a video signal recorded on a recording medium. The playback apparatus includes: an acquisition part (27) for acquiring placement information; a storing part (21) for storing video output setting information indicative of an output setting for the video signal and audio output setting information indicative of an output setting for the audio signal; and a control part (19) for reading from the storing part (21) the video output setting information and the audio output setting information which correspond to the placement information acquired by the acquisition part, performing control for outputting the video signal based on the video output setting information, and performing control for outputting the audio signal based on the audio output setting information.

## Description

### TECHNICAL FIELD

The present invention relates to a playback apparatus and a playback system for reproducing an audio signal and a video signal that are recorded on a recording medium.

### BACKGROUND ART

To audiovisually enjoy an audio signal and a video signal that are recorded on a digital versatile disc (DVD), a user needs to previously set output means for the audio signal reproduced from the DVD and output means for the video signal according to an environment in which a DVD player is placed. When the output means for the audio signal is to be set, for example, in a case where speakers connected to the DVD player are a speaker system composed of a left channel and a right channel, the user sets an output channel for the audio signal to "2 channels". Alternatively, in a case where the speakers connected to the DVD player are a 5.1-channel speaker system, the output channel for the audio signal is set to "5.1 channels".

In addition, the user sets the output means for the video signal according to a kind of input terminal provided to a display device such as a liquid crystal display connected to the DVD player. For example, to connect a video output terminal of the DVD player to a video input terminal provided to the display device, interlaced output means is set as the video output means of the DVD player. Alternatively, when the video output terminal of the DVD player is to be connected to a component input terminal provided to the display device, progressive output means is set as the video output means of the DVD player. When the video output terminal of the DVD player is to be connected to a digital input terminal provided to the display device, digital output means is set as the video output means of the DVD player.

With a conventional DVD player, an interlaced-type video signal and a progressive-type video signal can be outputted simultaneously from the interlaced output means and the progressive output means, respectively. However, in order to output the video signals simultaneously from the progressive output means and the digital output means, each of the output means needs to be provided with an independent signal processing circuit because the digital video signal outputted from the digital output means is higher in resolution than the progressive-type video signal outputted from the progressive output means, which raises manufacturing cost thereof. This makes it necessary for the user to select one of the progressive output means and the digital output means as means for outputting a video signal.

In addition, the progressive output means takes time for signal processing for converting the interlaced-type video signal into the progressive-type video signal, which causes a lag between the progressive-type video signal outputted from the DVD player and the audio signal synchronized with the video signal. Therefore, some conventional DVD players include means that allows the user to perform such a setting that an output timing of the audio signal is adjusted to the output timing of the interlaced-type video signal, the output timing of the progressive-type video signal, or the output timing of the digital video signal.

Accordingly, some of the conventional DVD players can hierarchically display on the display device a large number of setting items for reproducing the audio signal and the video signal (see, for example, Patent Document 1).

As disclosed in Patent Document 1, the setting items are hierarchically displayed on the display device, which makes it possible for the user to perform an operation for confirming or changing a setting item. However, since there are a large number of setting items for the DVD player, it is hard for a beginner user who has just started to use the DVD player to know how to set each of the setting items. Moreover, in a home, in order to obtain an optimum audiovisual environment according to a room in which the DVD player is placed, the user needs to change the setting items that have been set depending on a location where the DVD player is placed.

The present invention has been made in order to solve the above-mentioned problems, and provides a playback apparatus and a playback system capable of facilitating a setting suitable for an optimum audiovisual environment.
Patent Document 1: JP 2004-165725 A

### DISCLOSURE OF THE INVENTION

In order to attain the above-mentioned object, according to a first aspect of the present invention, a playback apparatus, which reproduces an audio signal and a video signal that are recorded on a recording medium, includes: an acquisition part for acquiring, from an external device, placement information indicative of a location where the external device is placed; a storing part for storing video output setting information indicative of an output setting for the video signal and audio output setting information indicative of an output setting for the audio signal; and a control part for reading from the storing part the video output setting information and the audio output setting information which correspond to the placement information acquired by the acquisition part, performing control for outputting the video signal based on the video output setting information, and performing control for outputting the audio signal based on the audio output setting information. Accordingly, it is possible to facilitate a setting suitable for an optimum audiovisual environment for the playback apparatus based on the placement information indicative of the location where the external device is placed.

Besides, in the above-mentioned playback apparatus, the playback apparatus further includes: a generator part for generating a display signal for causing a display device connected to the playback apparatus to perform display for allowing selection of the location where the playback apparatus is placed; and selection means for receiving an operation for selecting the location where the playback apparatus is placed from a selection screen displayed on the display device based on the display signal generated by the generator part, in which the control part reads from the storing part the video output setting information and the audio output setting information which correspond to the location where the playback apparatus is placed which has been selected by the selection means, performs control for setting output means for the video signal based on the video output setting information, and performs control for setting output means for the audio signal based on the audio output setting information. Accordingly, it is possible to further facilitate the selection of the location where the playback apparatus is placed, and facilitate a setting suitable for an optimum audiovisual environment for the playback apparatus.

Besides, in the above-mentioned playback apparatus, the playback apparatus further includes: a generator part for generating a display signal for performing display for allowing selection of a kind of display device connected to the playback apparatus; and selection means for receiving an operation for selecting the kind of display device from a selection screen displayed on the display device based on the display signal generated by the generator part, in which the control part reads from the storing part the video output setting information and the audio output setting information which correspond to the kind of display device which has been selected by the selection means, performs control for setting output means for the video signal based on the video output setting information, and performs control for setting output means for the audio signal based on the audio output setting information. Accordingly, it is possible to further facilitate the selection of the kind of display device connected to the playback apparatus, and facilitate a setting suitable for an optimum audiovisual environment for the playback apparatus.

Further, in the above-mentioned playback apparatus, the acquisition part is characterized by acquiring the placement information from the external device when connected to the external device. Accordingly, it is possible to further facilitate the acquisition of the placement information from the external device, and facilitate a setting suitable for an optimum audiovisual environment for the playback apparatus.

In order to attain the above-mentioned object, a playback system according to a second aspect of the present invention includes: an external device; and a playback apparatus connected to the external device, in which: the external device includes a specifying part for specifying a location where the external device is placed; and the playback apparatus includes: an acquisition part for acquiring placement information indicative of the location where the external device is placed which has been specified by the specifying part, from the external device; a storing part for storing video output setting information indicative of an output setting for the video signal and audio output setting information indicative of an output setting for the audio signal which correspond to the location where the external device is placed; and a control part for reading from the storing part the video output setting information and the audio output setting information which correspond to the placement information acquired by the acquisition part, performing control for outputting the video signal based on the video output setting information, and performing control for outputting the audio signal based on the audio output setting information. Accordingly, it is possible to specify the location where the external device is placed, and facilitate a setting suitable for an optimum audiovisual environment for the playback system corresponding thereto.

In the above-mentioned playback system, the acquisition part included in the playback apparatus acquires the placement information from the external device when connected to the external device. Accordingly, it is possible to further facilitate the acquisition of the placement information from the external device, and facilitate a setting suitable for an optimum audiovisual environment for the playback apparatus.

### BRIEF DESCRIPTION OF THE DRAWINGS

Fig. 1 is a block diagram showing a configuration of a playback apparatus according to a first embodiment.
Fig. 2 is a diagram showing a selection screen for selecting a location where the playback apparatus according to the first embodiment is placed, being displayed on a display device.
Fig. 3 is a diagram showing setting information such as output setting information on a video signal and an audio signal, which is stored in a storing part according to the first embodiment.
Fig. 4 is a block diagram showing a configuration of a playback apparatus according to a second embodiment.
Fig. 5 is a diagram for explaining a configuration of a playback system according to an embodiment of the present invention.
Fig. 6 is a diagram showing setting information such as output setting information on a video signal and an audio signal corresponding to a placement location of an external device, which is stored in a storing part according to the second embodiment.
Fig. 7 is a diagram for explaining output settings for the video signal and the audio signal in a case where the playback system including the playback apparatus according to the second embodiment and the external device is placed in each room.

### BEST MODE FOR CARRYING OUT THE INVENTION

Hereinafter, description will be made of an embodiment mode of the present invention with reference to the figures.

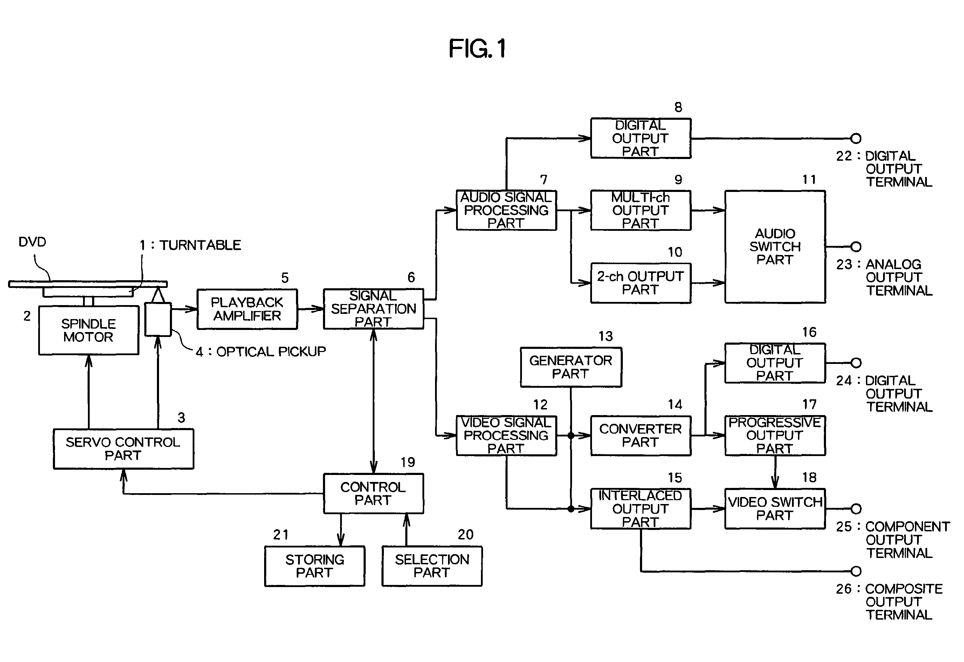

Fig. 1 is a block diagram showing a configuration of a playback apparatus which is a first embodiment as one embodiment mode of the present invention. The playback apparatus according to the first embodiment shown in Fig. 1 includes a turntable 1, a spindle motor 2, a servo control part 3, an optical pickup 4, a playback amplifier 5, a signal separation part 6, an audio signal processing part 7, a digital output part 8, a multi-channel (ch) output part 9, a 2-channel (ch) output part 10, an audio switch part 11, a video signal processing part 12, a generator part 13, a converter part 14, an interlaced output part 15, a digital output part 16, a progressive output part 17, a video switch part 18, a control part 19, a selection part 20, a storing part 21, a digital output terminal 22, an analog output terminal 23, a digital output terminal 24, a component output terminal 25, and a composite output terminal 26. Connection relationships among the above-mentioned components are indicated by lines with arrows in Fig. 1. The playback apparatus according to this embodiment is, for example, a DVD player.

The turntable 1 fixed to the spindle motor 2 has a recording medium such as a DVD attached thereto. When an instruction for a start of playback is inputted from an operation part (not shown), the servo control part 3 performs such control as to drive the spindle motor 2 to rotate at a predetermined linear speed. Further, the servo control part 3 controls a tracking servo circuit and a focus servo circuit (not shown) so that laser light emitted from the optical pickup 4 accurately follows a pit track on the DVD and focuses on a pit.

A signal read by the optical pickup 4 is wave-shaped and amplified by the playback amplifier 5, and inputted to the signal separation part 6. The signal separation part 6 separates the signal inputted from the playback amplifier 5 into a digital audio signal and a digital video signal.

The audio signal processing part 7 decodes the digital audio signal obtained by separation by the signal separation part 6. Further, the audio signal processing part 7 separates the decoded digital audio signal into digital audio signals of respective channels. The digital audio signal decoded by the audio signal processing part 7 is inputted to the digital output part 8. The digital audio signals obtained by separation for the respective channels are inputted to the multi-channel output part 9 and the 2-channel output part 10.

The digital output part 8 represents a digital interface, and outputs the digital audio signal inputted from the audio signal processing part 7 to the digital output terminal 22. The digital audio signal outputted from the digital output terminal 22 is inputted to a digital input terminal of an audiovisual (AV) amplifier or the display device. The multi-channel output part 9 converts multi-channel (for example, 5.1-channel) digital audio signals inputted from the audio signal processing part 7 into analog signals, and inputs multi-channel analog audio signals obtained by conversion to the audio switch part 11.

The 2-channel output part 10 downmixes the multi-channel digital audio signals inputted from the audio signal processing part 7 into 2-channel digital audio signals, converts the 2-channel digital audio signals into analog signals, and inputs 2-channel analog audio signals obtained by conversion to the audio switch part 11.

The audio switch part 11 switches, under control of the control part 19, between the multi-channel and 2-channel analog audio signals as a signal to be outputted from the analog output terminal 23. The analog audio signal outputted from the analog output terminal 23 is inputted to an analog input terminal of the AV amplifier or the display device.

The video signal processing part 12 decodes a digital video signal inputted from the signal separation part 6 via an extensible protocol such as a Moving Picture Experts Group (MPEG) system. The digital video signal decoded by the video signal processing part 12 is inputted to the converter part 14 and the interlaced output part 15. The digital video signal decoded by the video signal processing part 12 becomes an interlaced-type video signal.

The generator part 13 generates an on-screen display signal for displaying, on the display device connected to the playback apparatus according to the first embodiment, an operation state of an apparatus and a character, a graphical shape, or the like indicative of an operation instruction to cause the user to select a location where the playback apparatus according to the first embodiment is placed. The generated on-screen display signal is inputted to the converter part 14 and the interlaced output part 15 along with the digital video signal outputted from the video signal processing part 12.

The converter part 14 converts the interlaced-type digital video signal inputted from the video signal processing part 12 into a progressive-type digital video signal. The progressive-type digital video signal obtained by conversion is inputted to the digital output part 16 and the progressive output part 17. The interlaced output part 15 converts the interlaced-type digital video signal inputted from the video signal processing part 12 into an analog signal. An interlaced-type analog video signal obtained by conversion is inputted to the video switch part 18 and the composite output terminal 26. The composite output terminal 26 causes the interlaced-type analog video signal that has been outputted from the interlaced output part 15 to be outputted to the display device as a composite video signal.

The digital output part 16 represents, for example, a High-Definition Multimedia Interface (HDMI) interface, and outputs the progressive-type digital video signal inputted from the converter part 14 to the digital output terminal 24. The digital output terminal 24 represents, for example, an HDMI output terminal, and causes the progressive-type digital video signal outputted from the digital output part 16 to be outputted to the display device. The progressive output part 17 converts the progressive-type digital video signal inputted from the converter part 14 into an analog signal. A progressive-type analog video signal obtained by conversion is inputted to the video switch part 18.

The video switch part 18 switches, under the control of the control part 19, the analog video signal to be outputted from the component output terminal 25 between an interlaced type and a progressive type. The component output terminal 25 includes output terminals for outputting a brightness signal and a color difference signal, and outputs an analog video signal outputted from the video switch part 18 to a component input terminal of the display device as a component video signal.

The control part 19 performs centralized control over the playback apparatus according to the first embodiment. The selection part 20 includes an operation button for receiving an operation for selecting the location where the playback apparatus according to the first embodiment is placed, from the selection screen for selecting the location where the playback apparatus is placed, being displayed on the display device, based on the on-screen display signal generated by the generator part 13. The selection part 20 is provided to the operation part (not shown). The operation part includes operation buttons such as a display button for displaying the above-mentioned selection screen on the display device, a playback start button, and a stop button. The storing part 21 stores audio output setting information for setting output means for the audio signal and video output setting information for setting output means for the video signal corresponding to the location where the playback apparatus according to the first embodiment is placed.

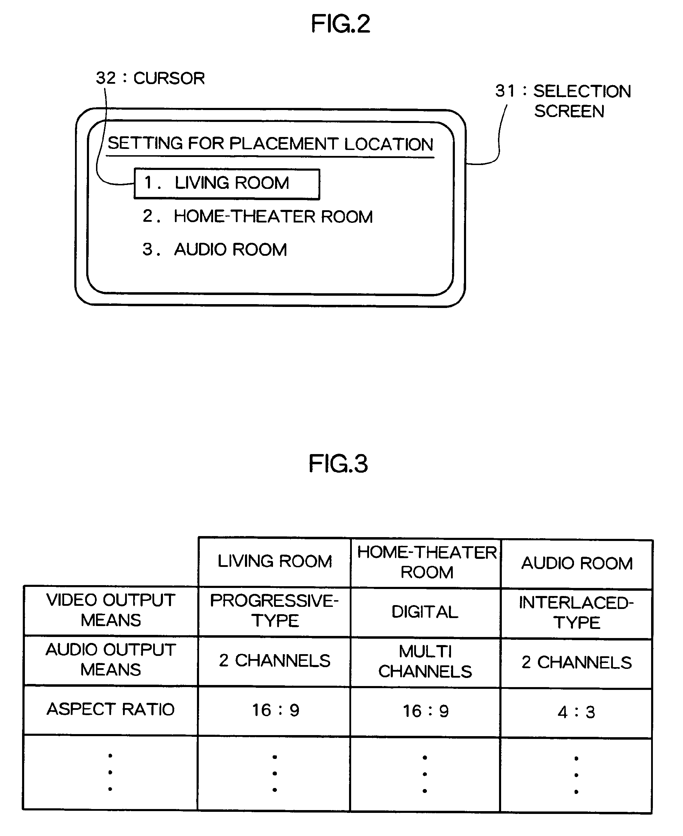

Next, description will be given of settings for the output means for the video signal and the audio signal corresponding to the location where the playback apparatus according to the first embodiment is placed. Fig. 2 is a diagram showing the selection screen for selecting the location where the playback apparatus according to the first embodiment is placed, being displayed on the display device.

Upon reception of the operation for displaying the selection screen from the operation part (not shown), the generator part 13 generates the on-screen display signal for displaying a selection screen 31 as shown in Fig. 2. In this embodiment, the location where the playback apparatus according to the first embodiment is placed is selected from among a living room, a home-theater room, and an audio room. The user performs an operation for moving a cursor 32 through the selection part 20 to select the location where the playback apparatus according to the first embodiment is placed.

Generally, a progressive-type television set having a relatively large screen is placed in the living room in many cases. Then, the playback apparatus according to the first embodiment such as a DVD player and the television set are connected to each other so that the video signal reproduced by the DVD player is outputted from the television set, and further connected to each other so that the audio signals reproduced by the DVD player are outputted from left and right speakers built in the television set.

Therefore, as shown in Fig. 3, in this embodiment, if the living room is selected as the location where the playback apparatus according to the first embodiment is placed, the output means for the video signal of the playback apparatus is set to progressive-type output means, and an aspect ratio is set to "16:9". Then, the output means for the audio signal of the playback apparatus is set to 2-channel output means. In addition, an output timing of the audio signal is set to be adjusted to an output timing of the progressive-type video signal.

A home theater has become widespread in recent years, and users having a home-theater room in their homes are increasing in number. Generally, the home-theater room will contain the playback apparatus according to the first embodiment such as a DVD player, a projector, a screen, an AV amplifier, and a multi-channel speaker system. Then, the DVD player is connected to the projector directly or via the AV amplifier, and outputs the reproduced video signal to the projector. The projector projects the inputted video signal onto the screen. In addition, the DVD player is connected to the AV amplifier, and outputs the reproduced audio signal to the AV amplifier. The AV amplifier outputs the inputted audio signal to the multi-channel speaker system for each channel.

Therefore, in this embodiment, if the home-theater room is selected as the location where the playback apparatus according to the first embodiment is placed, the output means for the video signal of the playback apparatus is set to digital output means, and the aspect ratio is set to "16: 9". This is because the DVD player and the projector that are equipped with the HDMI interface have become widespread. Then, the output means for the audio signal of the playback apparatus is set to multi-channel output means.

Placed in the audio room for enjoying high quality audio are the playback apparatus according to the first embodiment such as a DVD player, a display device such as a television set, a pre-main amplifier, and a 2-channel speaker system. Then, the DVD player is connected to the pre-main amplifier, and outputs the reproduced audio signal to the pre-main amplifier. The pre-main amplifier outputs the inputted audio signal to the 2-channel speaker system. In addition, the DVD player is connected to the display device such as a television set, and outputs the on-screen display signal to the display device.

Therefore, in this embodiment, if the audio room is selected as the location where the playback apparatus according to the first embodiment is placed, the output means for the audio signal of the playback apparatus is set to 2-channel output means. Then, a video signal is not inputted to the display device, and the on-screen display signal for the operation state of the apparatus and the character, the graphical shape, or the like indicative of the operation instruction is inputted, so the output means for the video signal of the playback apparatus is set to interlaced-type output means, and the aspect ratio is set to "4:3". Alternatively, when the analog and digital audio signals are outputted simultaneously, there is a fear that the digital audio signal may interfere with the analog audio signal to superimpose noise thereon, so the digital output means of the playback apparatus is set to stop.

As described above, the setting information on the output means for the video signal and the audio signal corresponding to the location where the playback apparatus according to the first embodiment is placed is stored in the storing part 21 as shown in Fig. 3. Fig. 3 shows the setting information on the output means for the video signal and the audio signal corresponding to the location where the playback apparatus according to the first embodiment is placed, which is stored in the storing part 21. The control part 19 reads the video output setting information and the audio output setting information corresponding to the placement location selected by the selection part 20.

For example, when the living room is selected by the selection part 20, as shown in Fig. 3, the control part 19 reads from the storing part 21 the video output setting information with "progressive-type" as the video output means and "16:9" as the aspect ratio, and reads the audio output setting information with "2 channels" as the audio output means. Based on the video output setting information and the audio output setting information that have been read, the control part 19 controls the audio signal processing part 7, the video signal processing part 12, the audio switch part 11, and the video switch part 18.

Further, the playback apparatus according to the first embodiment may allow the setting of the output means for the video signal and the audio signal to be performed according to a kind of display device connected thereto. Examples of the kind of display device include a progressive-type television set, a projector, and an interlaced-type television set.

The progressive-type television set is often placed in the above-mentioned living room. Therefore, when the user performs an operation for moving the cursor 32 through the selection part 20 to select the progressive-type television set as the display device connected to the playback apparatus according to the first embodiment, the output means for the video signal is set to the progressive-type output means, and the aspect ratio is set to "16:9". Then, the output means for the audio signal is set to the 2-channel output means. In addition, the output timing of the audio signal is set to be adjusted to the output timing of the progressive-type video signal.

Since the projector is often placed in the above-mentioned home-theater room, when the user selects the projector as the display device connected to the playback apparatus according to the first embodiment, the output means for the video signal is set to the digital output means, and the aspect ratio is set to "16:9". Then, the output means for the audio signal is set to the multi-channel output means.

Since the interlaced-type television set is often placed in the above-mentioned audio room, when the user selects the interlaced-type television set as the display device connected to the playback apparatus according to the first embodiment, the output means for the audio signal is set to the 2-channel output means, and the output means for the video signal is set to the interlaced-type output means. Then, the aspect ratio is set to "4:3", and the digital output means is set to stop.

Further, the playback apparatus according to the first embodiment may allow the setting of the output means for the video signal and the audio signal to be performed according to a kind of amplifier connected thereto. Examples of the kind of amplifier include a display device in which an amplifier is built, an AV amplifier, and a pre-main amplifier.

As described above, the playback apparatus according to the first embodiment has the setting information on the output means for the video signal and the audio signal corresponding to the kind of display device connected thereto stored in the storing part 21. The control part 19 reads the video output setting information and the audio output setting information corresponding to the kind of display device selected by the selection part 20 from the storing part 21, and based on the video output setting information and the audio output setting information that have been read, controls the audio signal processing part 7, the video signal processing part 12, the audio switch part 11, and the video switch part 18. Therefore, the playback apparatus according to the first embodiment makes it possible for the user to intuitively grasp the setting items, and makes it possible to reduce the number of the setting items to provide a setting suitable for an environment in which the playback apparatus is placed.

Next, description will be given of a playback apparatus according to a second embodiment as one embodiment mode of the present invention.

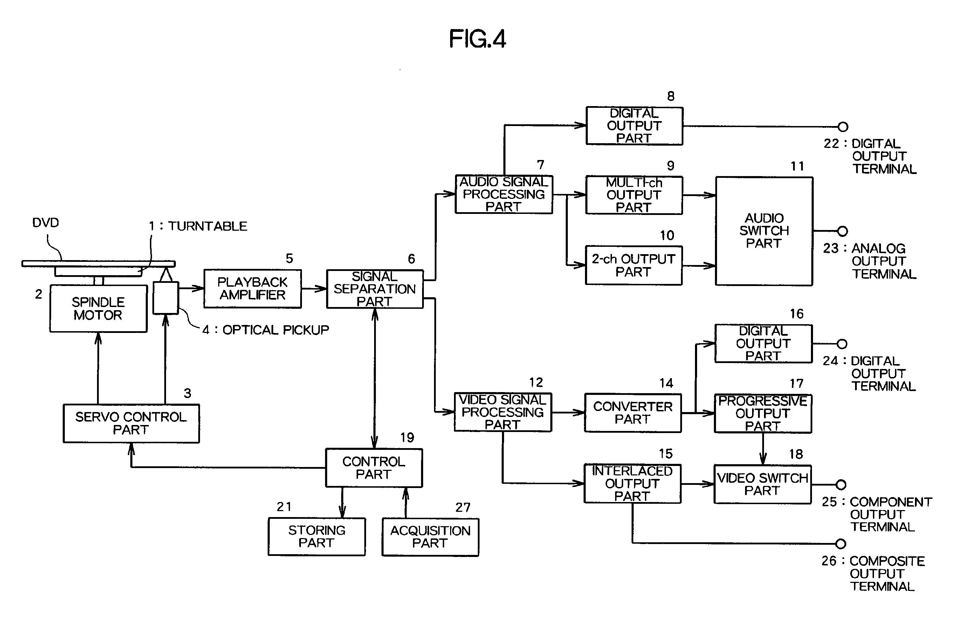

Fig. 4 is a block diagram showing a configuration of the playback apparatus which is the second embodiment of the present invention. The playback apparatus according to this embodiment shown in Fig. 4 includes a turntable 1, a spindle motor 2, a servo control part 3, an optical pickup 4, a playback amplifier 5, a signal separation part 6, an audio signal processing part 7, a digital output part 8, a multi-channel (ch) output part 9, a 2-channel (ch) output part 10, an audio switch part 11, a video signal processing part 12, a converter part 14, an interlaced output part 15, a digital output part 16, a progressive output part 17, a video switch part 18, a control part 19, a storing part 21, a digital output terminal 22, an analog output terminal 23, a digital output terminal 24, a component output terminal 25, a composite output terminal 26, and an acquisition part 27. In a similar manner to Fig. 1, connection relationships among the above-mentioned components are indicated by lines with arrows in Fig. 4. The playback apparatus according to this embodiment is, for example, a DVD player. In Fig. 4, the same components as those of the playback apparatus according to the first embodiment shown in Fig. 1 are denoted by the same reference numerals, and their description will be omitted.

The acquisition part 27 shown in Fig. 4 acquires, from an external device (not shown), placement information indicative of a location where the external device is placed. In this embodiment, in order to acquire the placement information from the external device, the acquisition part 27 is connected to the external device through a communication cable such as an Unshielded Twist Pair (UTP) cable or a Shielded Twist Pair (STP) cable.

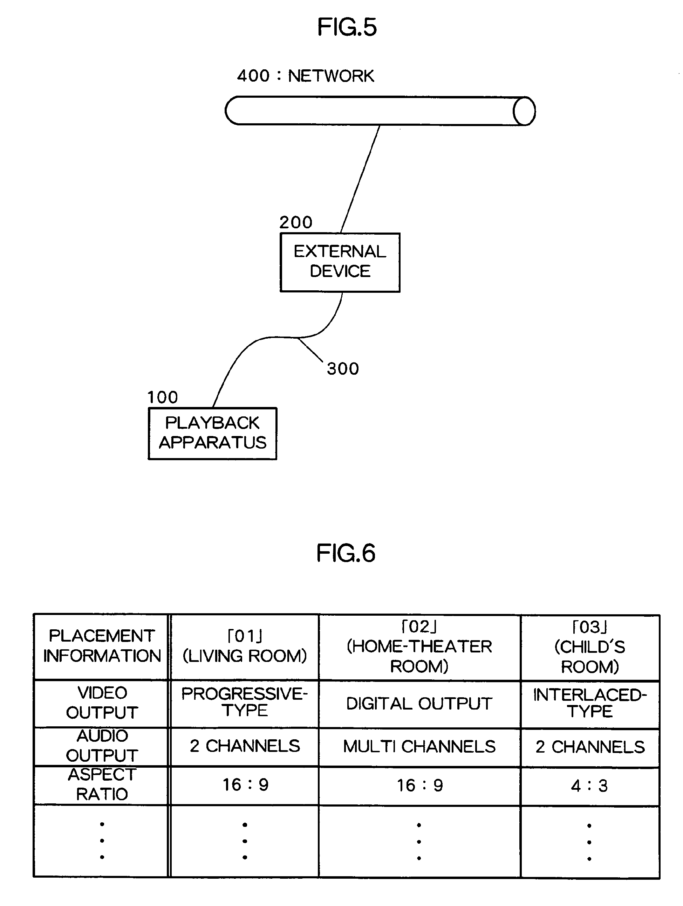

Fig. 5 is a diagram for explaining a configuration of a playback system according to an embodiment of the present invention. The playback system according to this embodiment shown in Fig. 5 includes a playback apparatus 100 according to the second embodiment and an external device 200. The playback apparatus 100 and the external device 200 are connected to each other via a communication cable 300. In this embodiment, the external device 200 is, for example, an AV amplifier, a set-top box, a hub, or the like capable of being connected to a network 400.

The external device 200 includes a specifying part (not shown) for specifying a location where the external device 200 is placed. The user uses the specifying part included in the external device 200 to specify a type of room within a home such as a living room, a home-theater room, or a child's room as the location where the external device 200 is placed. The external device 200 sets the placement information indicative of the specified location. The setting information on the output means for the video signal and the audio signal corresponding to the placement information set by the external device 200 is stored in the storing part 21 as shown in Fig. 6. Fig. 6 shows the setting information such as the output setting information on the video signal and the audio signal corresponding to the placement location of the external device 200, which is stored in the storing part 21.

Referring to Fig. 6, for example, the external device 200 sets the placement information of "01" when the living room is specified by the specifying part, sets the placement information of "02" when the home-theater room is specified, and sets the placement information of "03" when the child's room is specified. The network 400 represents a home network built within the home.

Herein, if the placement location of the external device 200 is the living room, generally, the progressive-type television set having a relatively large screen is placed in the living room in many cases. Then, the playback apparatus such as a DVD player and the television set are connected to each other so that the video signal reproduced by the DVD player is outputted from the television set, and further connected to each other so that the audio signals reproduced by the DVD player are outputted from left and right speakers built in the television set.

Therefore, in this embodiment, if the external device 200 is placed in the living room, the output means for the video signal of the playback apparatus 100 is set to the progressive-type output means, and the aspect ratio is set to "16: 9". Then, the output means for the audio signal of the playback apparatus 100 is set to the 2-channel output means. In addition, the output timing of the audio signal is set to be adjusted to the output timing of the progressive-type video signal, and digital output for the video signal is set to off.

Next, if the placement location of the external device 200 is the home-theater room, generally placed in the home-theater room are the playback apparatus such as a DVD player, a projector, a screen, an AV amplifier, and a multi-channel speaker system. Then, the DVD player is connected to the projector directly or via the AV amplifier, and outputs the reproduced video signal to the projector. The projector projects the inputted video signal onto the screen. In addition, the DVD player is connected to the AV amplifier, and outputs the reproduced audio signal to the AV amplifier. The AV amplifier outputs the inputted audio signal to the multi-channel speaker system for each channel.

Therefore, in this embodiment, if the external device 200 is placed in the home-theater room, the output means for the video signal of the playback apparatus 100 is set to the digital output means, and the aspect ratio is set to "16:9". This is because the playback apparatus 100 such as the DVD player and the projector that are equipped with the HDMI interface have become widespread. Then, the output means for the audio signal of the playback apparatus 100 is set to the multi-channel output means.

Further, if the placement location of the external device 200 is the child's room, generally in the child's room, a television set having a relatively small screen is placed in many cases. Then, the playback apparatus such as a DVD player and the television set are connected to each other so that the video signal reproduced by the DVD player is outputted from the television set, and further connected to each other so that the audio signals reproduced by the DVD player are outputted from left and right speakers built in the television set.

Therefore, in this embodiment, if the external device 200 is placed in the child's room, the output means for the video signal of the playback apparatus 100 is set to the interlaced-type output means, and the aspect ratio is set to "4:3". Then, the output means for the audio signal of the playback apparatus 100 is set to the 2-channel output means. In addition, a parental level (audiovisual limitation) is set to, for example, "PG-13".

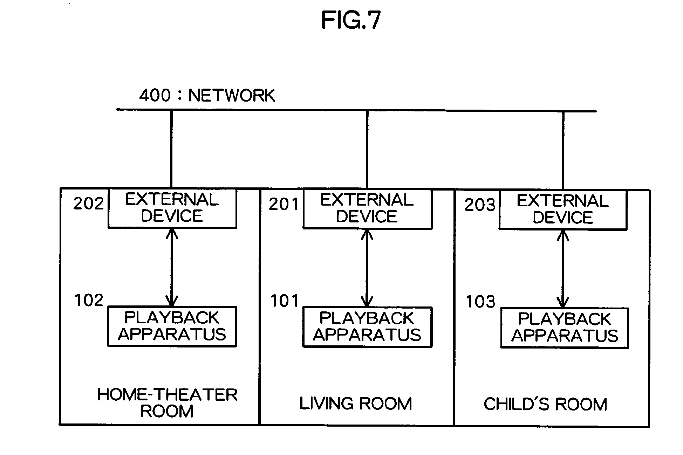

Fig. 7 is a diagram for explaining output settings for the video signal and the audio signal in a case where the playback system including the playback apparatus according to the second embodiment and the external device is placed in each room. As shown in Fig. 7, a playback system including a playback apparatus 101 according to the second embodiment and an external device 201 that can be connected to the network 400 is placed in the living room. The user uses a specifying part included in the external device 201 to specify the living room as the placement location of the external device 201. The external device 201 sets "01" as the placement information when the living room is specified.

When connected to the external device 201 through the communication cable such as a UTP or an STP, the playback apparatus 101 acquires the placement information "01" from the external device 201. The acquired placement information "01" is inputted to the control part 19. As shown in Fig. 6, the control part 19 reads from the storing part 21 the setting information corresponding to the inputted placement information "01" which includes "progressive-type", "16:9", and "2 channels". Based on the video output setting information and the audio output setting information that have been read from the storing part 21, the control part 19 controls the audio signal processing part 7, the audio switch part 11, the video signal processing part 12, and the video switch part 18.

As shown in Fig. 7, a playback system, including a playback apparatus 102 according to the second embodiment and an external device 202 that can be connected to the network 400, is placed in the home-theater room. The user uses a specifying part included in the external device 202 to specify the home-theater room as the placement location of the external device 202. The external device 202 sets "02" as the placement information when the home-theater room is specified.

When connected to the external device 202 through the communication cable such as a UTP or an STP, the playback apparatus 102 acquires the placement information "02" from the external device 202. The acquired placement information "02" is inputted to the control part 19. As shown in Fig. 6, the control part 19 reads from the storing part 21 the setting information corresponding to the inputted placement information "02" which includes "digital output", "16:9", and "multi channels". Based on the video output setting information, the audio output setting information, and the like that have been read from the storing part 21, the control part 19 controls the audio signal processing part 7, the audio switch part 11, the video signal processing part 12, and the video switch part 18.

As shown in Fig. 7, a playback system, including a playback apparatus 103 according to the second embodiment and an external device 203 that can be connected to the network 400, is placed in the child's room.

The user uses a specifying part included in the external device 203 to specify the child's room as the placement location of the external device 203. The external device 203 sets "03" as the placement information when the child's room is specified.

When connected to the external device 203 through the communication cable such as a UTP or an STP, the playback apparatus 103 acquires the placement information "03" from the external device 203. The acquired placement information "03" is inputted to the control part 19. As shown in Fig. 6, the control part 19 reads from the storing part 21 the setting information corresponding to the inputted placement information "03" which includes "interlaced-type", "4:3", and "2 channels". Based on the video output setting information, the audio output setting information, and the like that have been read from the storing part 21, the control part 19 controls the audio signal processing part 7, the audio switch part 11, the video signal processing part 12, and the video switch part 18.

In Fig. 7, in a case where the external device 201 is set as a master device, the external device 202 and the external device 203 become relay devices. Examples of the external device to be a candidate for the master device include an AV amplifier or a set-top box, and when the AV amplifier is used as the master device, the AV amplifier or a hub is used as the relay device. Alternatively, when the set-top box is used as the master device, the AV amplifier is used as the relay device.

As shown in Fig. 7, the external device 201, the external device 202, and the external device 203 that are connected to the network 400 can exchange data with one another via the network 400. For example, when the external device 201 is set as the AV amplifier to be the master device while the external device 202 is set as the AV amplifier to be the relay device, the external device 201 being the master device can acquire the placement information "02" from the external device 202 being the relay device.

The playback apparatus 101 acquires the placement information "02" on the external device 202 from the external device 201, and reads from the storing part 21 the video output setting information and the audio output setting information corresponding to the acquired placement information "02". Then, based on the video output setting information and the audio output setting information that have been read, there is obtained a setting for outputting the audio signal and the video signal that are optimum for an audiovisual environment of the home-theater room.

The audio signal and the video signal that have been outputted from the playback apparatus 101 are transmitted by the external device 201 to the external device 202 via the network 400, and reproduced by the speakers and the projector that are connected to the external device 202. Accordingly, the playback apparatus according to this embodiment allows the setting for outputting the audio signal and the video signal that are optimum for an audiovisual environment where the external device is placed according to the placement information acquired from the external device placed in a different location via the network 400.

As described above, the playback apparatus according to the second embodiment can facilitate the setting for obtaining the optimum audiovisual environment according to the acquired placement information by acquiring the placement information from the external device connected thereto. Therefore, the playback apparatus according to this embodiment can be set to have the optimum audiovisual environment only by being connected to the external device. Further, even if there is a change in the placement room, the playback apparatus according to this embodiment can be set to have the optimum audiovisual environment by being connected to the external device placed in the room after the change. Accordingly, the user does not need to set a large number of setting items, unlike a conventional playback apparatus. Further, as described above, the playback system according to this embodiment specifies the placement room for the external device and causes the playback apparatus to acquire the placement information from the external device to thereby be able to facilitate the setting for placing the playback apparatus in the optimum audiovisual environment according to the acquired placement information.

What have been described above in detail are merely examples of the present invention, and it will be easy for those who skilled in the art to understand that a great number of modifications can be made on the exemplary embodiments without remarkably departing from the novel disclosure or advantages of the present invention. Therefore, all of those modifications are intended to be included in the scope of the present invention.

JP 2006-101406 A (filed in April 3, 2006) and JP 2006-248395 A (filed in September 13, 2006) are incorporated into the present invention with reference to entireties thereof including a specification, a scope of claims, drawings, and an abstract.

### INDUSTRIAL APPLICABILITY

The present invention is extremely useful in a playback apparatus for reproducing a signal from a recording medium recorded with an audio signal and a video signal.

## Claims

1. A playback apparatus, which reproduces an audio signal and a video signal that are recorded on a recording medium, comprising:
an acquisition part(27) for acquiring, from an external device(200), placement information indicative of a location where the external device(200) is placed;
a storing part (21) for storing video output setting information indicative of an output setting for the video signal and audio output setting information indicative of an output setting for the audio signal; and
a control part (19) for reading from the storing part the video output setting information and the audio output setting information which correspond to the placement information acquired by the acquisition part (27), performing control for outputting the video signal based on the video output setting information, and performing control for outputting the audio signal based on the audio output setting information.

2. A playback apparatus according to claim 1, further comprising:
a generator part(13) for generating a display signal for causing a display device connected to the playback apparatus to perform display for allowing selection of the location where the playback apparatus is placed; and
selection means (20) for receiving an operation for selecting the location where the playback apparatus is placed from a selection screen(31) displayed on the display device based on the display signal generated by the generator part(13),
wherein the control part (19) reads from the storing part (21) the video output setting information and the audio output setting information which correspond to the location where the playback apparatus is placed which has been selected by the selection means, performs control for setting output means for the video signal based on the video output setting information, and performs control for setting output means for the audio signal based on the audio output setting information.

3. A playback apparatus according to claim 1, further comprising:
a generator part(13) for generating a display signal for performing display for allowing selection of a kind of display device connected to the playback apparatus; and
selection means (20) for receiving an operation for selecting the kind of display device from a selection screen displayed on the display device based on the display signal generated by the generator part(13),
wherein the control part (19) reads from the storing part (21) the video output setting information and the audio output setting information which correspond to the kind of display device which has been selected by the selection means (20), performs control for setting output means for the video signal based on the video output setting information, and performs control for setting output means for the audio signal based on the audio output setting information.

4. A playback apparatus according to claim 1, wherein the acquisition part (27) acquires the placement information from the external device(200) when connected to the external device (200).

5. A playback system, comprising:
an external device(200); and
a playback apparatus connected to the external device(200),
wherein:
the external device(200) includes a specifying part for specifying a location where the external device is placed; and
the playback apparatus includes:
an acquisition part(27) for acquiring placement information indicative of the location where the external device (200)is placed which has been specified by the specifying part, from the external device(200);
a storing part(21) for storing video output setting information indicative of an output setting for a video signal and audio output setting information indicative of an output setting for an audio signal which correspond to the location where the external device(200) is placed; and
a control part(19) for reading from the storing part (21)the video output setting information and the audio output setting information which correspond to the placement information acquired by the acquisition part, performing control for outputting the video signal based on the video output setting information, and performing control for outputting the audio signal based on the audio output setting information.

6. A playback system according to claim 5, wherein the acquisition part (27) included in the playback apparatus acquires the placement information from the external device(200) when connected to the external device(200).
